# EUROPEAN PATENT APPLICATION

(11) **EP 4 797 215 A1**
(43) Date of publication of application: **26.08.2026**
(21) Application number: 25198337.5
(22) Date of filing: 27.08.2025
(51) Int. Cl.: G06V 10/25, B25J 9/16, G06V 10/26, G06V 10/44, G06V 10/764, G06V 10/82, G06V 20/60

(54) **ROBOTIC BIN PICKING USING GRADIENT-BASED OCCLUSION ESTIMATION**

(30) Priority: 21.02.2025 US 202563761325 P
(71) Applicant: Siemens Aktiengesellschaft, 80333 München (DE)
(72) Inventor: ZHU, Brian, 94608 Emeryville (CA)
(74) Representative: HKW Intellectual Property PartG mbB

(57) **Abstract**

A method for performing robotic bin picking includes acquiring, via one or more cameras, image data of a scene containing a plurality of objects in a bin, the image data including a depth image of the scene. The method includes obtaining a number of object masks, each object mask corresponding to an object in the scene predicted via instance segmentation based on the image data. For each object mask, the method includes computing a gradient similarity between image gradients of the depth image and the object mask, and computing an occlusion score for the corresponding object based on the computed gradient similarity. The method includes selecting an object to be picked based on the computed occlusion scores of the plurality of object masks and subsequently outputting a command to a robot controller to effect grasping of the selected object from the bin by a robot.

## Description

### TECHNICAL FIELD

The present disclosure relates to robotic bin picking, and more particularly to a methodology for implementing a safe picking order in robotic bin picking applications by evaluating grasp ability of objects based on occlusion estimation.

### BACKGROUND

Robotic bin picking involves the use of robots to retrieve objects from containers or "bins". This capability is fundamental to many industrial applications, such as manufacturing, assembly, logistics, warehousing, among others. Robotic bin picking has evolved from traditional methods requiring manual programming of robot movements, where operators may predefine robot poses for pick and drop positions, to more advanced systems leveraging computer vision and artificial intelligence. Many modern robotic bin picking systems utilize RGB-D cameras to capture both color images and depth information of randomly arranged objects in bins. These visual inputs may then be processed by sophisticated computer vision algorithms or trained neural networks to determine optimal grasping points. This approach can eliminate the need for predefined pick and drop positions, allowing for greater flexibility in handling various object types and arrangements. The technology has proven effective even without prior knowledge of object geometries or colors, making it a versatile solution for diverse industrial applications.

One of the key challenges in robotic bin picking involves ensuring that objects are picked in a safe order. Executing picks on occluded objects, which are covered by other objects in the bin, can lead to various failure modes. A common example of a failure mode is what is referred to as a "pop-out", where an object being picked is underneath another object, causing the other object to pop out of the bin. Another example of a failure mode may include inability to maintain a suction seal during the picking motion in case of robots equipped with suction grippers. Such failures can result in system downtime, product damage, and reduced overall efficiency of automated bin picking operations.

Existing approaches to occlusion estimation, primarily driven by the academic research community, typically involve training instance segmentation neural networks to predict both modal and amodal masks for each object. Modal masks include only the visible portion of an object while amodal masks encompass both visible and occluded portions. Occlusion estimates may be computed by determining the percentage of the amodal mask area not covered by the modal mask. However, datasets containing modal and amodal masks are often synthetically generated and may include additional privileged information such as object relation graphs, which can be used to train neural networks for direct picking order assignment. Alternative approaches augment object detection datasets by directly assigning ranks to objects based on task-specific criteria and training detection networks to predict these ranks. These existing approaches may face limitations including labor-intensive annotation requirements for real-world data, potential inconsistencies in occluded portion annotations, and sim-to-real gaps when using synthetically generated datasets that may not generalize well to real-world scenarios

### SUMMARY

Aspects of the present disclosure can address and overcome at least the aforementioned technical challenges by providing a computationally efficient and practical methodology that enables robotic bin picking systems to estimate the occlusion of objects in a bin and thus implement a safe order of picking the objects. In particular, aspects of this disclosure provide a gradient-based occlusion estimation methodology that can utilize predicted objects masks, obtained using instance segmentation of image data, and compute an occlusion estimate by computing a gradient similarity between the image gradients of an input depth image and the predicted masks.

According to a first aspect, a computer-implemented method for performing robotic bin picking is provided. The method comprises acquiring, via one or more cameras, image data of a scene containing a plurality of objects in a bin, wherein the image data comprises a depth image of the scene. The method comprises obtaining a plurality of object masks, each object mask corresponding to an object in the scene predicted via instance segmentation based on the image data. For each object mask, the method comprises computing a gradient similarity between image gradients of the depth image and the object mask, and computing an occlusion score for the corresponding object based on the computed gradient similarity. The method comprises selecting an object to be picked based on the computed occlusion scores of the plurality of object masks, and outputting a command to a robot controller to effect grasping of the selected object from the bin by a robot.

According to a second aspect, a non-transitory computer-readable storage medium is provided. The non-transitory computer-readable storage medium comprises instructions that, when processed by one or more processors, configure the one or more processors to perform the method according to the first aspect.

According to a third aspect, a system for robotic bin picking is provided. The system comprises a robot, a controller for controlling the robot, and one or more cameras configured to capture image data of a scene containing a plurality of objects in a bin, wherein the image data comprises a depth image of the scene. The system further comprises one or more processors and memory storing instructions executable by the one or more processors. The instructions, when executed, cause the one or more processors to obtain the depth image and a plurality of object masks, each object mask corresponding to an object in the scene predicted via instance segmentation based on the image data. For each object mask, the instructions cause the processors to compute a gradient similarity between image gradients of the depth image and the object mask, and compute an occlusion score for the corresponding object based on the computed gradient similarity. The instructions further cause the processors to select an object to be picked based on the computed occlusion scores of the plurality of object masks, and output a command to the controller to effect grasping of the selected object from the bin by the robot.

Additional technical features and benefits may be realized through the techniques of the present disclosure. Embodiments and aspects of the disclosure are described in detail herein and are considered a part of the claimed subject matter. For a better understanding, refer to the detailed description and to the drawings.

### BRIEF DESCRIPTION OF FIGURES

The foregoing and other aspects of the present disclosure are best understood from the following detailed description when read in connection with the accompanying drawings. To easily identify the discussion of any element or act, the most significant digit or digits in a reference number refer to the figure number in which the element or act is first introduced.
FIG. 1 schematically illustrates an autonomous system configured for configured for performing robotic bin picking according to some embodiments.
FIG. 2 is a high-level block diagram illustrating a computer-implemented workflow for performing robotic bin picking based on gradient based occlusion estimation according to some embodiments.
FIG. 3 schematically illustrates a simple example to conceptualize steps of the proposed gradient based occlusion estimation methodology, showing one-dimensional cross-sectional views for depth image and object masks.
FIG. 4 schematically illustrates graphs of first order derivatives (or "image gradients") of the one-dimensional depth image and object masks shown in FIG. 3.
FIG. 5 schematically illustrates computation of gradient similarity between the image gradients of the depth image and the object masks from FIG. 3 and FIG. 4.
FIG. 6 is a flowchart illustrating an algorithm for gradient based occlusion estimation according to some embodiments.
FIG. 7 depicts a visualization of extraction of a region-of-interest (ROI) from an object mask and a depth image.
FIG. 8 depicts a visualization of computation of image gradients of the depth image ROI and object mask ROI.
FIG. 9 depicts a visualization of computation of gradient similarity between image gradients of the depth image ROI and the object mask ROI via pixel-wise dot product operation.
FIG. 10 depicts a visualization of thresholding of the gradient similarity to compute a positive gradient alignment map.
FIG. 11 depicts a visualization of computation of a mask edge.
FIG. 12 depicts a visualization of computation of mask edge pixels with positive gradient alignment.
FIG. 13 depicts a visualization of computation of an occlusion score by normalizing the number of mask edge pixels with positive gradient alignment with the total number of mask edge pixels.

### DETAILED DESCRIPTION

Various technologies are described herein that are directed to robotic grasping of objects from a bin in industrial applications. The term "bin", as used herein, refers to a container or other structure (e.g., a tray, tote, pallet, carton, etc.) capable of containing physical objects. A robotic bin picking application typically involves controlling a robot having a robotic arm with end effector to grasp (or "pick") objects individually from a pile of objects disposed in a bin. The objects may be of the same or assorted types, and may, for example, be disposed in random configurations or poses in the bin.

The methodology presented in this disclosure can address the problem of picking objects from a bin autonomously by a robot in an order is safe. In particular, the present methodology can be used for executing robotic picks in an order that ensures that objects that are not occluded, or are minimally occluded, are selectively picked first. Thereby, failure modes, such as pop-outs can be avoided.

The present methodology incorporates a gradient-based occlusion estimation technique. The methodology utilizes a depth image of a scene including the bin containing objects, as well as predicted object masks from an instance segmentation model, to compute occlusion scores for each object in the bin. The occlusion scores are computed by computing, for each object mask, a gradient similarity between image gradients of the depth image and image gradients of the object mask. The occlusion scores are used to selectively grasp an object from the bin by the robot.

The present methodology operates on the principle that gradient similarities between depth images and object masks reveal information about object boundaries and their relative positioning within the container. Two key observations drive this approach. First, along the mask edge of the object mask, if the height from depth image inside the object mask is larger than the height outside the object mask, then along this edge the object is taller than its surroundings (which may be an adjacent object). This behavior indicates that the object is likely not occluded along this edge. Secondly, along the mask edge, if the height from the depth image inside the object mask is smaller than the height outside the object mask, then along this edge the object is shorter than its surroundings (which may be an adjacent object). This behavior indicates that the object is most likely occluded along this edge. To locate the edges, the methodology computes image gradients of both the depth image and each object mask. The gradient similarity captures an alignment between image gradients of the depth image and object mask. According to disclosed embodiments, the gradient similarity may be computed by simply multiplying the image gradients of the depth image and the object mask gradients together, e.g., by way of computing a pixel-wise dot product between them.

The present methodology can offer significant computational efficiency, especially when compared to approaches that utilize specialized neural networks, such as neural networks trained on modal and amodal mask datasets. The gradient-based approach can operate directly on standard instance segmentation outputs without requiring additional training data. The computational efficiency can enable real-time processing in production environments where rapid decision-making may be necessary for maintaining throughput. The methodology can also provide scalability to robotic bin picking systems that are often required handle a very large variety of stock-keeping units (SKUs) and update deployed models with recently collected data. The methodology can integrate with broader autonomous manufacturing systems where robots adapt to varying product configurations and bin arrangements without human intervention.

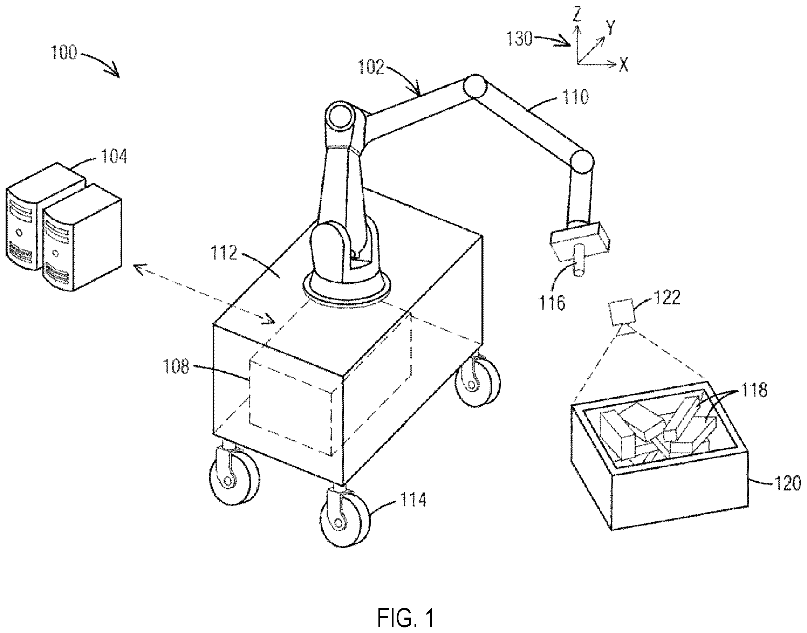

Turning now to the figures, FIG. 1 illustrates an autonomous system 100 configured for performing robotic bin packing according to one or more embodiments. The autonomous system 100 (herein after, "system") may be implemented, for example, in a factory setting. In contrast to conventional automation, autonomy gives each asset on the factory floor the decision-making and self-controlling abilities to act independently in the event of local issues. The system 100 may comprise one or more robots, such as the robot 102, which may be controlled by a computing system 104 to execute one or more industrial tasks within a physical environment, such as a shop floor. Examples of industrial tasks include assembly, transport, or the like.

The computing system 104 may comprise an industrial PC, or any other computing device, such as a desktop or a laptop, or an embedded system, among others. The computing system 104 can include one or more processors, such as one or more CPUs. GPUs, microprocessors or any other hardware configured to process information and/or control various operations associated with the robot 102. In particular, the computing system 104 may include a non-transitory computer-readable storage medium storing an application program defining instructions that, when processed by one or more processors, configure the one or more processors to operate the robot 102 as described herein.

To realize autonomy of the system 100, in some embodiments, the application program may be designed to operate the robot 102 to perform a task in a skill-based programming environment. In contrast to conventional automation, where an engineer is usually involved in programming an entire task from start to finish, typically utilizing low-level code to generate individual commands, in an autonomous system as described herein, a physical device, such as the robot 102, is programmed at a higher level of abstraction using skills instead of individual commands. The skills are derived for higher-level abstract behaviors centered on how the physical environment is to be modified by the programmed physical device. Illustrative examples of skills include a skill to grasp or pick up an object, a skill to place an object, a skill to open a door, a skill to detect an object, and so on.

The application program may generate controller code that defines a task at a high level, for example, using skill functions as described above, which may be communicated to a robot controller 108. From the high-level controller code, the robot controller 108 may generate low-level control signals for one or more motors for controlling the movement of the robot 102, such as angular position of the robot arms, swivel angle of the robot base, and so on, to execute the specified task. In other embodiments, the controller code generated by the application program may be communicated to intermediate control equipment, such as programmable logic controllers (PLC), which may then generate low-level control commands for the robot 102 to be controlled. Additionally, the application program may be configured to directly integrate sensor data from the physical environment in which the robot 102 operates. To this end, the computing system 104 may comprise a network interface to facilitate transfer of live data between the application program and various sensors, such as camera 122.

The robot 102 can include a robotic arm or manipulator 110 and a base 112 configured to support the robotic manipulator 110. The base 112 can include wheels 114 or can otherwise be configured to move within the physical environment 106. The robot 102 can further include an end effector 116 attached to the robotic manipulator 110. The end effector 116 may include a gripper configured to grasp (hold) and pick up an object 118. Examples of end effectors include vacuum-based grippers such as suction cups, antipodal grippers such as fingers or claws, magnetic grippers, among others. The robotic manipulator 110 can be configured to move so as to change the position of the end effector 116, to enable picking and moving objects 118 within the physical environment.

A robotic bin picking task may involve picking objects 118 in a singulated manner from the bin 120 using the end effector 116. The objects 118 may be disposed in random configuration (or poses) within the bin 120. The objects 118 can be of assorted types or of the same type. To accomplish this task, the system 100 may include sensors that enable the robot 102 to perceive the physical environment 106. As shown, these sensors may include (among others) a camera 122 for capturing an image of the scene that includes, in this case, the bin 120 containing the objects 118. The camera 122 may include, for instance, an RGB-D camera, or a point cloud sensor, among others. In some embodiments, the camera 122 may be positioned to achieve a top-down camera view of the bin 120. Image data captured by the camera 122 may be provided as input to the computing system 104. Based on the image data, the computing system 104 may select an object 118 to be grasped by the robot end effector 116. The selected object 118 may be determined based on the gradient-based occlusion estimation methodology described herein. Having selected the object, a command may be output to the robot controller 108 to effect grasping of the selected object 118 from the bin 120 by the robot 102. The command may include, for example, a pose of the end effector 116 to execute this grasp ("grasp pose"). As described above, the command may be output as a high-level controller code to the controller 108, which may therefrom generate low-level commands to control movement of the end robot 102.

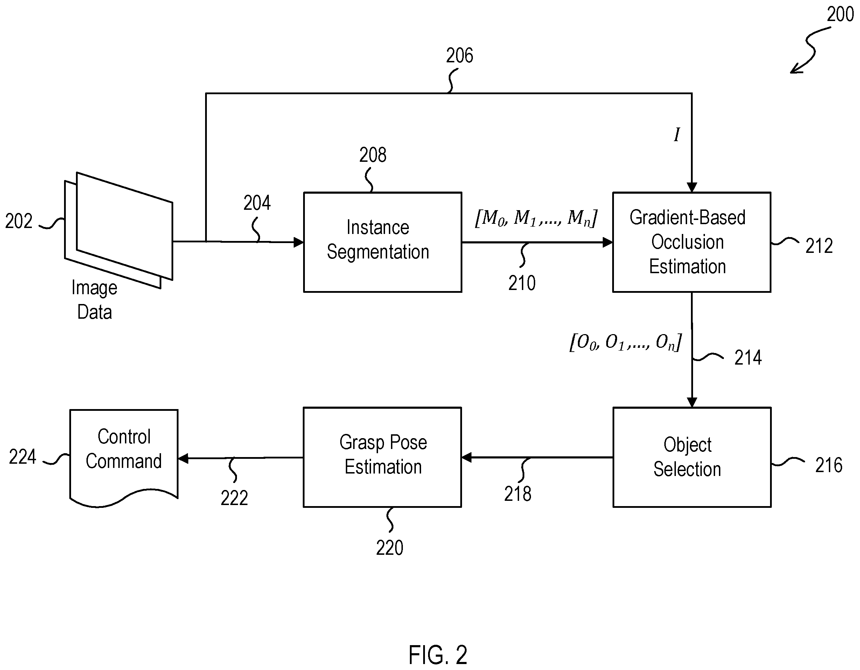

FIG. 2 illustrates a computer-implemented workflow 200 for performing robotic bin picking according to some embodiments. The various modules, such as the instance segmentation module 208, the gradient-based occlusion estimation module 212, the object selection module 216 and the grasp pose estimation module 220, described herein, including components thereof, may be implemented by a computing system in various ways, for example, as hardware and programming. The programming for the modules 208, 212, 216, 220 may take the form of processor-executable instructions stored on non-transitory machine-readable storage mediums and the hardware may include processors to execute those instructions. For example, the programs may run on the computing system 104 of the autonomous system 100 described in FIG. 1. In some cases, the processing capability of such a computing system may be distributed among multiple system components, such as among multiple processors and memories, optionally including multiple distributed processing systems or cloud/network elements.

Image data 202 of the scene, which includes the bin 120 containing the objects 118, may be captured by one or more cameras, such as the camera 122. In some embodiments, the image data 202 may include a color intensity image and a depth image of the scene. A color intensity image includes a two-dimensional (2D) representation of image pixels, where each pixel includes intensity values for a number of color components. An example of a color intensity image is an RGB color image, which is an image including pixel intensity information in red, green and blue color channels. A depth image may include a depth map including a 2D representation of image pixels that contains, for each pixel, a depth value. The depth values correspond to the distance of the surfaces of scene objects from a camera viewpoint. The color intensity image and the depth image may be aligned pixel-wise. For example, in some embodiments, a single RGB-D camera can be configured to acquire an image of the scene with RGB color and depth channels.

In some embodiments, the image data 202 may include a point cloud of the scene. A point cloud can be captured, for example, by a point cloud camera, LiDAR, and stereo cameras, among types of sensors. A point cloud may include a set of points in a three-dimensional (3D) coordinate system that represent a 3D surface or multiple 3D surfaces, where each point position is defined by its Cartesian coordinates in a real-world coordinate reference frame 130. In some cases, each point in a point cloud may be further defined by intensity values of color components (e.g., red, green and blue). The acquired point cloud can thus include a colorized 3D representation of all surfaces in the scene. A point cloud may be converted into a depth image and color intensity image, and vice versa, by applying a sequence of transformations based on camera intrinsic parameters, which typically include the coordinates of the principal point or optical center, and the focal length along orthogonal axes.

The instance segmentation module 208 may perform instance segmentation based on the image data 202 to detect objects in the scene and therefrom compute respective object masks. Instance segmentation essentially includes semantic segmentation and object detection with the added feature of identification of boundaries of the objects at the detailed pixel level. The input 204 to the instance segmentation module 208 typically includes the color intensity image (e.g., an RGB image) of the scene, but could alternately, or additionally, include the depth image of the scene. Given the input 204, an instance segmentation model, such as a trained convolutional neural network, may be used to compute an instance segmentation mask corresponding to each object detected in the scene. Examples of instance segmentation models that can be used or adapted for the present purpose include instance segmentation using: "Segment Anything Model" (SAM) developed by Meta AI, "You Look Only Once" (YOLO) model, Mask Region-based Convolutional Neural Network (Mask R-CNN), among others. Each instance segmentation mask computed by the model, referred to as "object mask", may include a pixel-wise binary map that separates pixels that denote a particular object from the rest of the scene. The output 210 of the instance segmentation module 208 may include a set of predicted object masks [*M*₀, *M*₁, ···, *Mₙ*], where each mask M corresponds to a detected object in the scene. In particular, the object masks [*M*₀, *M*₁, ··· *, Mₙ*] may be modal masks the include visible portions of the detected objects.

The gradient-based occlusion estimation module 212 may receive as inputs 206, 210, the depth image *I* and the set of object masks [*M*₀, *M*₁, ··· *, Mₙ*] respectively. In some embodiments, as disclosed herein, the input depth image *I* may comprise a depth map of the scene, where each pixel contains a depth value. The depth map may be typically captured via a top-down camera view of the bin 120. If the camera 122 is positioned at an angle in relation to the floor the bin 120, the camera image may be suitably re-projected to compute the height from the depth value using known transformations. In other embodiments, the input depth image I may be obtained by preprocessing the raw depth map captured by the camera 122, such that each pixel contains a height value indicative of a height in relation to the base of the bin 120. In this case, the input depth image I would comprise a height map of the scene. In the context of the gradient-based occlusion estimation module 212, depending on the implementation, "depth image I" may broadly refer to a depth map or a height map.

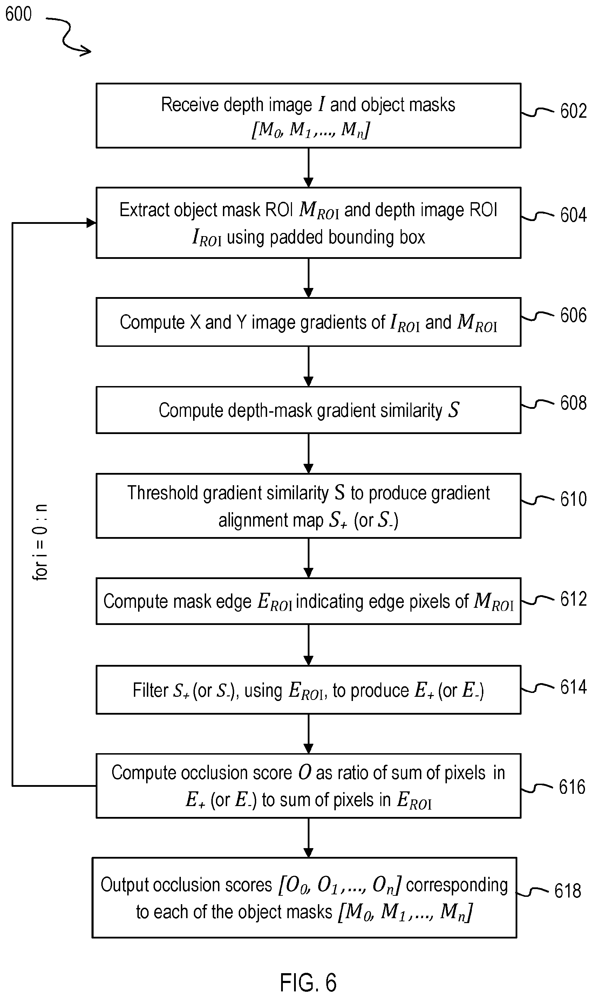

By processing the inputs, namely the depth image I and the object masks [*M*₀, *M*₁, ··· , *Mₙ*], the gradient-based occlusion estimation module 212 may produce an output 214 comprising a set of occlusion scores [*O*₀, O₁, ··· , *Oₙ*], where each occlusion score *O* corresponds to a particular object mask M. The gradient-based occlusion estimation module 212 may analyze the relationship between depth information in the depth image I and the boundaries defined by each of the object masks [*M*₀, *M*₁, *··· , Mₙ*], to estimate the likelihood (quantified by the occlusion score) that each object may be occluded by other objects within the bin 120. The occlusion scores [*O*₀, *O*₁, ··· , *Oₙ*] may be computed by computing gradient similarities between image gradients of the depth image I and image gradients of each of the object masks [*M*₀*, M*₁, ···, *Mₙ*]. An example of a sequence of operations performed by the gradient-based occlusion estimation module 212 is described later in connection with FIG. 6.

The object selection module 216 may receive the occlusion scores [*O*₀, *O*₄, ··· , *Oₙ*] and utilize these scores to select an object for robotic grasping. The object selection module 216 may analyze the occlusion scores [*O*₀, *O*₁, ···, *Oₙ*] to identify which object among the plurality of objects 118 may be most suitable for grasping in the current execution cycle. The output 218 of the object selection module 216 may include an object mask of the selected object.

In some embodiments, the object selection module 216 may select the object to be grasped solely based on the occlusion scores. For example, in some cases, when the occlusion scores are based on positive gradient alignment, the object selection module 216 may select the object with the highest occlusion score. On the other hand, when the occlusion scores are based on negative gradient alignment, the object selection module 216 may select the object with the lowest occlusion score.

In other embodiments, the object selection module 216 may select the object to be grasped based on a combination of factors, where the occlusion scores [*O*₀, *O*₁, ··· *, Oₙ*] may be one of multiple factors. For instance, in some cases, the object selection module 216 may combine the gradient-based occlusion scores [*O*₀, *O*₁, ··· , *Oₙ*] with other known occlusion estimates to arrive at the selected object. An example of such a known occlusion estimate is a height-based heuristic, which scores each object mask based on an average height/depth of the object mask. The height-based heuristic is designed to ensure that the topmost and/or tallest objects are picked first. While being effective for flatly placed objects, the height-based heuristic may not produce accurate occlusion estimates for objects that are vertically tilted. Combining the height-based heuristic with the gradient-based occlusion estimate can significantly improve the output, especially in scenarios where objects are placed in random orientations inside the bin.

The grasp pose estimation module 220 may utilize the selected object mask 218 to compute an optimal grasp pose 222 for the robot end effector 116 for grasping the selected object. For example, the optimal grasp pose 222 may specify the grasping point on the object (e.g., defined by coordinates in relation to object mask frame of reference), orientation of the end effector 116 (e.g., defined by yaw angle), and approach trajectory (e.g., defined by a normal to the grasping surface of the object) for the robot end effector 116 to execute a stable grasp of the selected object from the bin 120. For example, the grasp pose estimation module 220 may utilize known algorithms and/or deep learning models such as grasp convolutional neural networks to determine the optimal grasp pose 222 based on the selected object mask and depth information from the depth image.

Finally, based on the optimal grasp pose 222, a control command 224 may be generated, that may be output to the robot controller 108 to effect grasping of the selected object by the robot 102. The control command 224 may be derived from the optimal grasp pose 222 and may include high-level instructions that the robot controller 108 may translate into low-level motor commands for controlling the movement of the robot 102. The control command 224 may be generated by transforming the parameters of the optimal grasp pose 222, such as the grasping point, orientation and approach of the robot end effector 116 to the real-world coordinate frame of reference 130. The control command 224 may additionally specify timing and sequencing information for executing the grasp operation. The controller 108 may receive the control command 224 and generate appropriate signals to control the robotic arm 110 and end effector 116 to perform the grasping operation on the selected object 118 within the bin 120.

The described workflow 200 may then be repeated in the next execution cycle for the robot 102 to pick the next object 118 from the bin 120. Executing the workflow 200 over successive cycles can realize a robotic bin picking operation where objects 118 are autonomously picked by the robot 102 in an order that is safe, thereby avoiding one or more of the above-described failure modes.

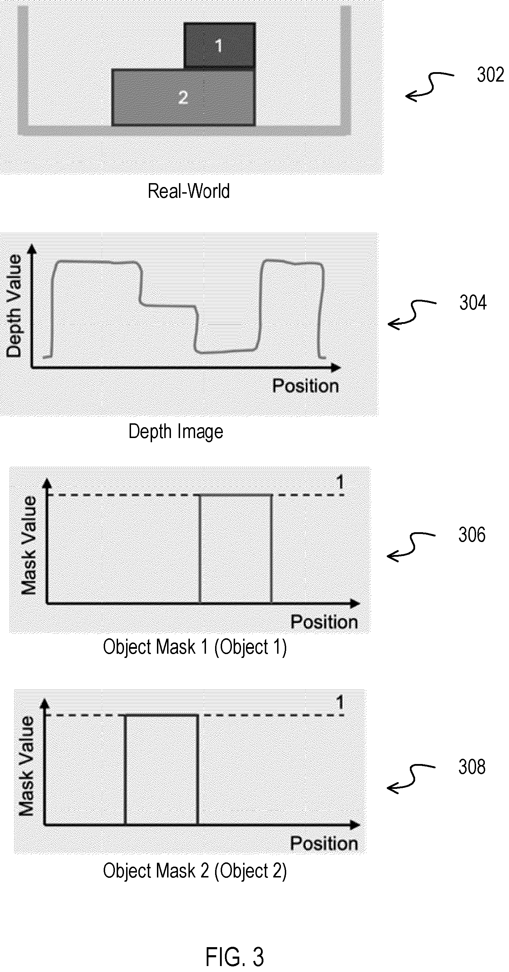

FIG. 3 illustrates a simple example to help conceptualize the operations involved in the gradient-based occlusion estimation methodology. In this figure, the image 302 shows a real-word scene, in an elevation view, depicting two objects placed in a bin. As shown, one of the objects, namely object 1, is placed on top of another object, namely object 2. Naturally, the safest order for picking objects is object 1 followed by object 2, as object 2 is occluded.

The graphic 304 represents a one-dimensional cross-sectional view of a depth image of the scene. In this case, the depth image is a depth map, whereby notably the depth image is inverted as it represents distance from the camera that captured the depth image, which is typically overhead pointing downward. The depth image 304 is noisy to reflect camera noise typical in real-world scenarios.

The graphics 306 and 308 respectively represent one-dimensional cross-section views of object mask 1, corresponding to object 1, and object mask 2, corresponding to object 2. Object mask 1 and object mask 2 may be predicted using an instance segmentation model as described above. Notably, object mask 2 only captures the visible area of object 2, which is typical for instance segmentation. This means that the predicted object masks not only provide information about object boundaries, but also the boundaries between objects. For example, as seen in FIG. 3, the right edge of the object mask 2 in the graphic 308 aligns with the boundary between object 1 and object 2 in the graphic 302.

The goal of the gradient-based occlusion estimation methodology is to utilize depth information around mask edges, which define object boundaries, to determine if an object could be occluded. In particular, the following observations can be made:
Observation 1: Along the mask edge, if the height from depth image inside the object mask is larger than the height outside the object mask, then along this edge the object is taller than its surroundings (which may be an adjacent object). This behavior indicates that the object is likely not occluded along this edge.
Observation 2: Conversely, if, along the mask edge, the height from the depth image inside the object mask is smaller than the height outside the object mask, then along this edge the object is shorter than its surroundings (which may be an adjacent object). This behavior indicates that the object is most likely occluded along this edge.

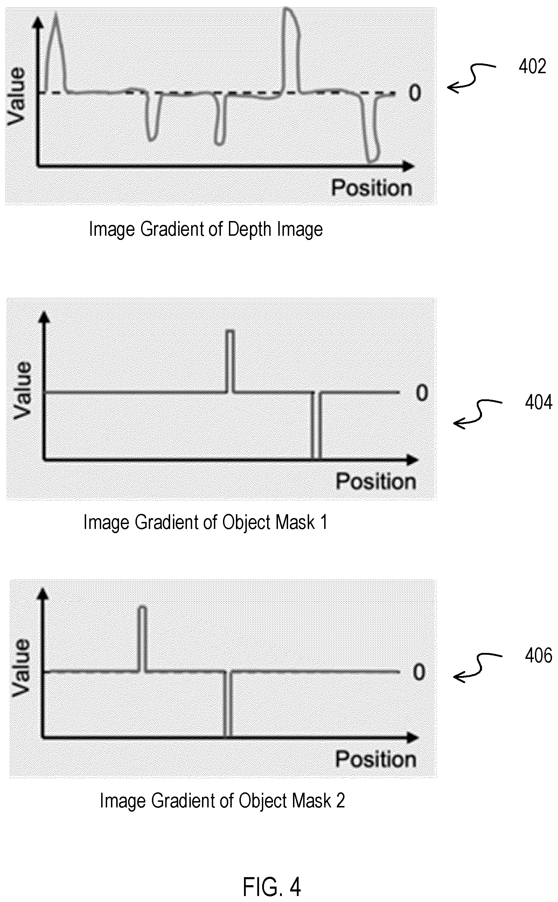

A natural way to obtain information about the location and the direction of edges is by computing a first-order derivative. In the case of the depth image and object masks, this can be achieved by computing image gradients. FIG. 4 visualizes what the gradient of the depth image and the gradients of the object mask 1 and object mask 2 would look like in one dimension. In this figure, the graphic 402 represents the image gradient of the depth image, the graphic 404 represents the image gradient of object mask 1, and the graphic 406 represents the image gradient of the object mask 2.

As seen in FIG. 4, the image gradients are indicative of the magnitude or intensity of the change, as well as the direction (i.e. positive or negative) of change. In the context of the depth image, the magnitude of the image gradient helps localize where there are sharp changes in height or depth, while the direction indicates whether the height is increasing or decreasing. In the context of the object masks, the image gradients indicate where the mask starts and ends. Based on the information provided by the image gradients of the depth image and the object masks, the aforementioned observations 1 and 2 may be rephrased as follows:
Observation 1 may be rephrased as: An object is taller than its surroundings when the change in height is positive where the object mask starts (i.e. positive image gradients of both, the depth image and the object mask) or when change in height is negative where the mask ends (i.e. negative image gradients of both, the depth image and the object mask).
Observation 2 may be rephrased as: An object is shorter than its surroundings when the change in height is negative where the object mask starts (i.e. negative image gradient of the depth image, positive image gradient of the object mask) or when change in height is positive where the mask ends (i.e. positive image gradient of the depth image, negative image gradient of the object mask).

Based on these observations, a simple way to identify where along the mask edge an object is taller or shorter is by multiplying the depth and mask gradients together. Thus:
1. If an object is taller than its surroundings, then the image gradients of the depth image and the object mask both must have significant magnitude, and their signs must match, resulting in a large and positive value. This may be referred to as "positive" gradient alignment.
2. If an object is shorter than its surroundings, then the image gradients of the depth image and object mask both must have significant magnitude, and their signs must be the opposite of each other, resulting in a large and negative value. This may be referred to as "negative" gradient alignment.

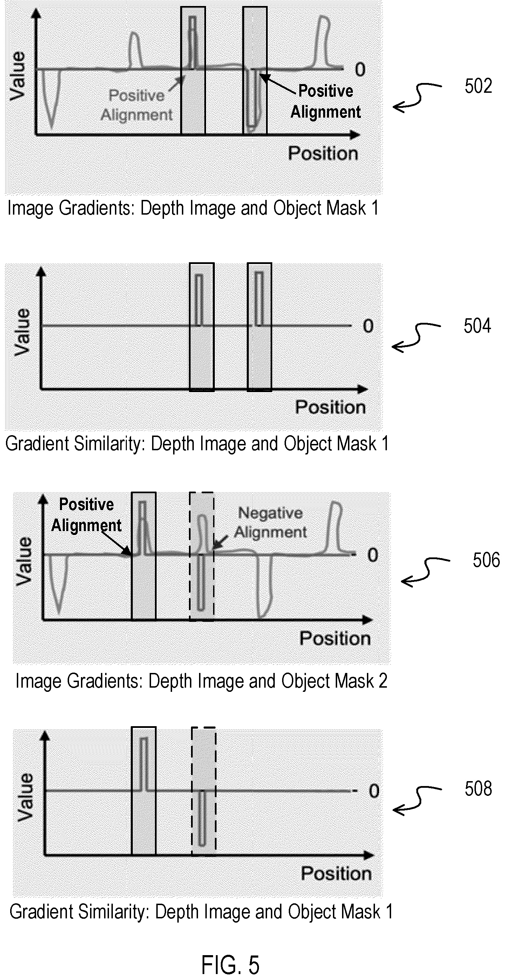

FIG. 5 visualizes the alignment and multiplication of the image gradients of the depth image and the object mask and the resulting graphs, which represent "gradient similarity". As seen, the image gradient of the depth image is negated before being multiplied with the image gradient of the object mask. This is because the value of pixels in depth images correspond to distance from the camera. In robotic bin picking, where the camera is placed overhead and points downward, lower depth indicates larger height in the real world while smaller depth indicates lower height.

In this figure, the graphic 502 represents the alignment of the image gradient of the depth image (from graphic 402) and the image gradient of object mask 1 (from graphic 404), while the graphic 504 represents the gradient similarity resulting from multiplication of the image gradients of the depth image and object mask 1. Likewise, the graphic 506 represents the alignment of the image gradient of the depth image (from graphic 402) and the image gradient of object mask 2 (from graphic 406), while the graphic 508 represents the gradient similarity resulting from multiplication of the image gradients of the depth image and object mask 2. The locations of positive gradient alignment are highlighted using bold boxes, while the locations of negative gradient alignment are highlighted using dashed boxes.

Referring to the graphics 504 and 508, from the computed gradient similarity between the depth image and the object masks, namely object mask 1 and object mask 2, the following deductions can be made that can enable determining an order to pick the objects:
1. Object mask 1 has more points of "positive gradient alignment" (location highlighted by bold boxes) than object mask 2.
2. Object mask 1 has no points of "negative gradient alignment" (location highlighted by dashed box) while object mask 2 has one.

Both of the above deductions may independently lead to the determination that object 1 is more preferable to pick than object 2. For example, these deductions can be computed by thresholding the gradient similarity graphs 504, 508 and counting the number of points that meet the threshold. For example, one approach may be to threshold both gradient similarity graphs 504, 508 so as to only include points that are greater than 0. This would yield two points of positive gradient similarity for object mask 1 versus one point of positive gradient similarity for object mask 2, thereby indicating the object 1 is preferred for picking.

FIG. 6 illustrates a method 600 for gradient-based occlusion estimation according to some embodiments. For example, in connection with the computer-implemented workflow 200 shown in FIG. 2, the method 600 may be implemented by the gradient-based occlusion estimation module 212. The method 600 includes a sequence of processor-executable operations, defining logic for computing occlusion scores based on the depth image and the object masks. In particular, the method 600 is an example of how the earlier described computation on a one-dimensional graph can be expanded to a two-dimensional image.

The method 600 may begin at 602 by receiving inputs, which include the depth image *I* and the set of predicted object masks [*M*₀, *M*₁, ··· *, Mₙ*]. For example, as described above, the depth image I may be obtained from the image data 202, which may be acquired via the camera 122. The set of object masks [*M*₀, *M*₁, *···* , *Mₙ*] may be obtained from the instance segmentation module 208 based on the image data 202.

Based on the inputs received at 602, operations 604-616 may be performed for each individual object mask M to compute a respective occlusion score *O* corresponding to that object mask M. In some embodiments, operations 604-616 may be performed in parallel for the plurality of object masks [*M*₀, *M*₁, ···, *Mₙ*].

For computing image gradients of the depth image I and the object mask *M,* a region-of-interest (ROI) may first be extracted from each of these images *I* and M. This is performed at 604. Specifically, in order to compute the gradient at the edges, the extracted regions-of-interest may desirably include not only the object but also the surrounding depth information. The result of the operation at 604 includes an object mask ROI, denoted *M_{ROI},* and a depth image ROI, denoted *I_{ROI}.*

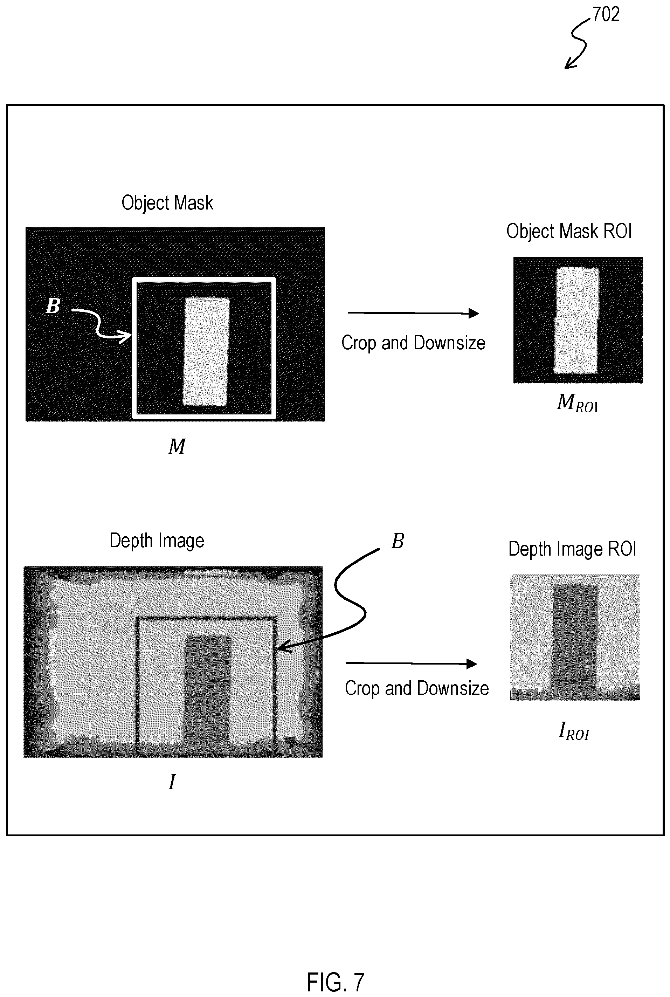

The operation at 604 may be illustrated by way of a visualization 702 shown in FIG. 7. In a first step, a padded bounding box B may be computed around the object mask M. The padded bounding box *B* may be a rectangular region that encompasses the detected object in the object mask M with additional margin or padding extending beyond the actual object boundaries. In this case, the padded bounding box B may be computed by determining the minimum and maximum pixel coordinates of the object mask M to establish a tight bounding box, and then expanding this region by adding a predetermined number of pixels or a percentage-based margin to all sides, thereby creating an enlarged rectangular area that captures both the object and its surrounding context for gradient analysis.

The same (i.e., identical) padded bounding box B may then be used to crop both the object mask M and the depth image *I* to extract the respective regions-of-interest *M_{ROI}* and *I_{ROI}.* Optionally, to achieve computational efficiency, in some embodiments, the regions-of-interest *M_{ROI}* and *I_{ROI}* may be obtained by downsizing the respective cropped images to a defined image size (e.g., to 64x64 pixels).

The following equations may describe the operation at 604, as visualized in FIG. 7. $B = get _ padded _ bbox \left(M\right)$ ${I}_{ROI} = crop \left(I, B\right) , {M}_{ROI} = crop \left(M, B\right)$ where *get_padded_bbox* is a function that accepts a binary mask as an input and outputs a bounding box *B* and *crop* is a function that accepts any image and a bounding box and returns a cropped version of the input image.

Next, at 606, image gradients of the depth image ROI *I_{ROI}* and the object mask ROI *M_{ROI}* may be computed. For two-dimensional images, as in the case of *I_{ROI}* and *M_{ROI},* this may involve computing image gradients along mutually perpendicular X and Y directions, referred to as X and Y image gradients.

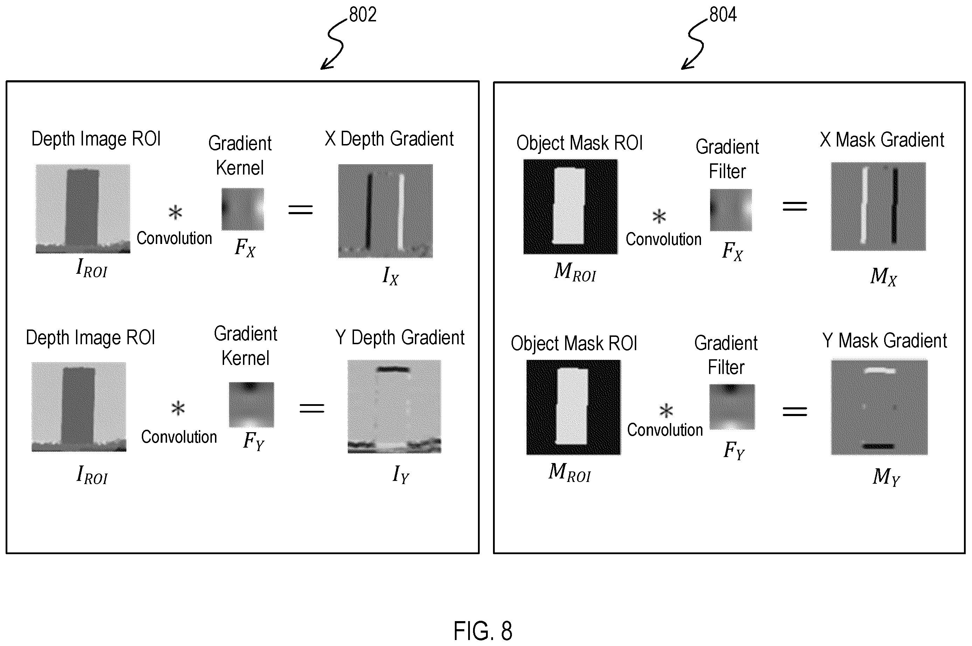

The operation at 606 may be visualized as shown in FIG. 8. The X and Y image gradients of the extracted regions-of-interest *I_{ROI}* and *M_{ROI}* may be computed by convolving each of these extracted regions-of-interest with X and Y gradient kernels respectively. That is, as depicted in the visualization 802, the X and Y image gradients of the depth image ROI *I_{ROI}* may be computed by convolving *I_{ROI}* with an X gradient kernel *Fₓ* and a Y gradient kernel *F_{y}* respectively. Likewise, as depicted in the visualization 804, the X and Y image gradients of the object mask ROI *M_{ROI}* may be computed by convolving *M_{ROI}* with the X gradient kernel *Fₓ* and the Y gradient kernel *F_{y}* respectively.

For this operation, *Fₓ* and *F_{y}* can include any gradient kernels that can provide edge detection capabilities. Common examples of such gradient kernels include Sobel, Prewitt, and Laplacian filters. As seen, the operation may produce four results, namely: X and Y image gradients of the depth image ROI *I_{ROI},* which are denoted *Iₓ* and *I_{y}* respectively; and X and Y image gradients of the object mask ROI *M_{ROI},* which are denoted *Mₓ* and *M_{y}* respectively. The following equations may describe the operation at 606, as visualized in FIG. 8. ${I}_{x} = {I}_{ROI} ∗ {F}_{x} , {I}_{y} = {I}_{ROI} ∗ {F}_{y}$ ${M}_{x} = {M}_{ROI} ∗ {F}_{x} , {M}_{y} = {M}_{ROI} ∗ {F}_{y}$ **where** * **denotes** convolution operation.

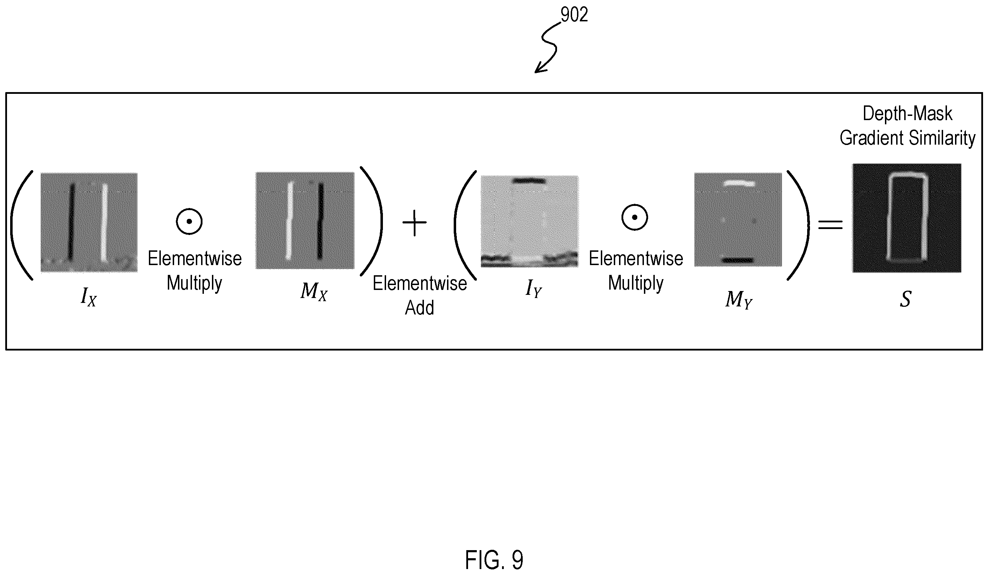

Next, at 608 a gradient similarity between image gradients of the depth image and the object mask may be computed. According to disclosed embodiments, the operation may involve computing a gradient similarity between the image gradients *Iₓ, I_{y}* of the depth image ROI and the image gradients *Mₓ, M_{y}* of the object mask ROI. The gradient similarity, denoted S, may be computed by computing a pixel-wise dot product between the X and Y image gradients *Iₓ, I_{y}* of the depth image ROI and the X and Y image gradients *Mₓ, M_{y}* of the object mask ROI. The operation at 608 may be illustrated by way of a visualization 902 shown in FIG. 9.

An intuitive way to understand the operation at 608 is to consider the X and Y gradients of each pixel as a vector. Each pixel gradient vector in the depth and mask ROI may be denoted as $\left〈\frac{\partial {I}_{ROI}}{\partial x}, \frac{\partial {I}_{ROI}}{\partial y}\right〉$ and $\left〈\frac{\partial {M}_{ROI}}{\partial x}, \frac{\partial {M}_{ROI}}{\partial y}\right〉$, respectively. Since these gradients are in two-dimensional space, the natural analog to multiplying one-dimensional derivatives is to compute the dot product between the depth and mask gradient vectors: $\left〈\frac{\partial {I}_{ROI}}{\partial x}, \frac{\partial {I}_{ROI}}{\partial y}\right〉 ⋅ \left〈\frac{\partial {M}_{ROI}}{\partial x}, \frac{\partial {M}_{ROI}}{\partial y}\right〉 = \frac{\partial {I}_{ROI}}{\partial x} \frac{\partial {M}_{ROI}}{\partial x} + \frac{\partial {I}_{ROI}}{\partial y} \frac{\partial {M}_{ROI}}{\partial y}$

The computation of these pixel-wise dot products may be parallelized by utilizing elementwise multiplication and addition to obtain the gradient similarity S between depth and object mask across the entire ROI. The following equations may describe the operation at 608, as visualized in FIG. 9. $S = \left(-{I}_{x}⊙{M}_{x}\right) + \left(-{I}_{y}⊙{M}_{y}\right)$ where ⊙ is the elementwise multiplication (i.e. the Hadamard) operator and + is an elementwise addition.

In the disclosed embodiments, the depth image I received at 602 includes a depth map, where higher pixel value represents lower height and vice versa. Accordingly, as in the case of the earlier described one-dimensional example, the depth image gradients *Iₓ* and *I_{y}* may be negated before computing the gradient similarity S. That is, for computing the gradient similarity S, a negative sign may be applied (as shown in the equation above) to the computed X and Y image gradients *Iₓ* and *I_{y}* of the depth image ROI prior to computing the pixel-wise dot product. In embodiments where the depth image I includes a height map (i.e. higher pixel value represents higher height and vice versa), the computed image gradients *Iₓ* and *I_{y}* of the depth image ROI can be directly used (i.e., without negation) for computing the gradient similarity S. Formally described, when the depth image I received at 602 includes a height map, the gradient similarity S may be computed as: $S = \left({I}_{x}⊙{M}_{x}\right) + \left({I}_{y}⊙{M}_{y}\right)$ where ⊙ is the elementwise multiplication (i.e. the Hadamard) operator and + is an elementwise addition.

The gradient similarity S may comprise a two-dimensional array of pixels. The pixel values in the gradient similarity S are not necessarily binary, i.e., continuous or grayscale. To effectively derive an occlusion score from the gradient similarity S, the gradient similarity S may be thresholded based on a defined pixel value to obtain a gradient alignment map. This gradient alignment may be a binary map. As used in this disclosure, the term "binary map" refers to a two-dimensional array of pixels, where the pixels have binary values (e.g., 0 or 1). Depending on the implementation, the gradient alignment map may indicate pixels with positive gradient alignment or pixels with negative gradient alignment.

Positive gradient alignment refers to alignment of gradients of the same sign (i.e., both positive or both negative) in the image gradients of the depth image ROI and the object mask ROI along an object boundary or edge. Negative gradient alignment refers to alignment of gradients of opposite signs in the image gradients of the depth image ROI and the object mask ROI along an object boundary or edge. In the gradient similarity S, pixels with positive gradient alignments may have significantly higher values while pixels with negative gradient alignment may have significantly lower values. Thresholding the gradient similarity S based on a defined pixel value may result in a binary map that can define a positive gradient alignment map or a negative gradient alignment map. This operation is performed at 610.

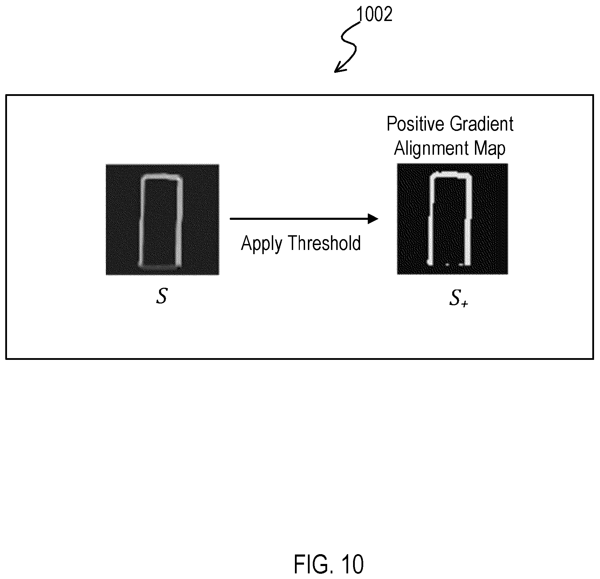

The operation at 610 may be illustrated by way of a visualization 1002 shown in FIG. 10. In the example shown in FIG. 10, a threshold is applied to the gradient similarity S to produce a positive gradient alignment map *S*₊, which is a binary map indicating pixels with positive gradient alignment. The "defined pixel value" for thresholding may be a matter of design choice. For example, this defined pixel value can be the average value of the pixels in the gradient similarity S. The positive gradient alignment map *S*₊ may indicate pixels having values that are higher than this defined pixel value. The following equation may describe the operation at 610, as visualized in FIG. 10. ${S}_{+} = threshold \left(S\right)$ where *threshold* is a user-defined function that accepts an array of continuous scalars and outputs an equal-sized array of binary values corresponding to pixels with positive gradient alignment.

In some embodiments, instead of, or in addition to computing a positive gradient map *S*₊, the operation at 610 may involve computing a negative gradient alignment map S_.The negative gradient alignment map *S₋* may indicate pixels having values that are lower than a defined pixel value. Although subsequent operations of the method 600 are described primarily based on a positive gradient alignment map *S*₊, similar operations may be devised using a negative gradient alignment map S_.

To compute an occlusion score based on a gradient alignment map, it may be desirable to filter the pixels in gradient alignment map, in this case, the positive gradient alignment map *S*₊, such that only pixels along the mask edge are considered. The mask edge defines the object boundary in the object mask ROI.

Continuing with the method 600, in a next operation at 612, a mask edge *E_{ROI}* may be computed that indicates edge pixels of the object mask ROI *M_{ROI}.* In some embodiments, this can be achieved by eroding the object mask ROI *M_{ROI}* and computing an elementwise XOR between *M_{ROI}* and its eroded version.

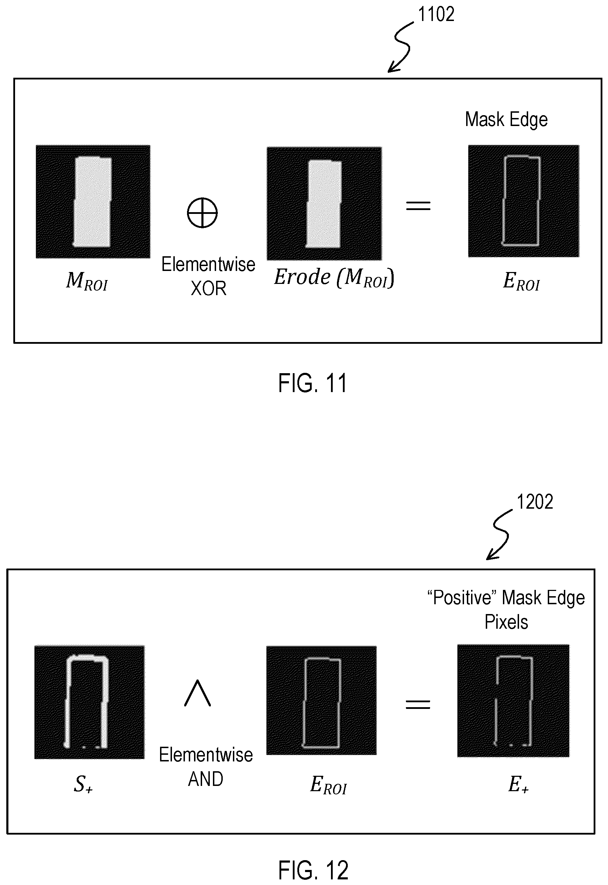

"Eroding" refers to a morphological erosion operation, which may shrink the boundaries of the object mask ROI *M_{ROI}* inward by a single pixel or any predetermined number of pixels. The elementwise XOR between the object mask ROI *M_{ROI}* and its eroded version may isolate the boundary pixels that were removed during the erosion process. The XOR operation may compare corresponding pixels between the original object mask ROI and its eroded version, producing a binary map output, where pixels that differ between the two operands (object mask ROI and its eroded version) may be set to one and pixels that match may be set to zero. The result of this XOR operation is the mask edge *E_{ROI}* that contains only the boundary pixels of the original object mask ROI *M_{ROI},* effectively creating a thin outline that defines the perimeter of the object. The operation at 612 is depicted by the visualization 1102 in FIG. 11. The following equation may describe the operation at 612. ${E}_{ROI} = {M}_{ROI} ⊕ erode \left({M}_{ROI}\right)$ where ⊕ is the elementwise XOR operation and *erode* is a function that accepts a binary map as input and outputs an eroded binary map.

In a subsequent operation at 614, the gradient alignment map, in this case, the positive gradient alignment map *S*₊, may be filtered using the computed mask edge *E_{ROI},* to obtain pixels along the mask edge *E_{ROI}* that have positive (or alternately, negative) gradient alignment. For example, in some embodiments, the operation at 614 may involve filtering the gradient alignment map through an elementwise AND with the mask edge. "Elementwise AND" involves performing a logical AND operation between corresponding pixels of two binary maps. Specifically, in this case, the operation may involve computing an elementwise AND between the positive gradient alignment map *S*₊ and the mask edge *E_{ROI}* to obtain a binary map *E*₊ indicating positive mask edge pixels. The resultant binary map *E*₊ thus indicates pixels along the mask edge *E_{ROI}* that have positive gradient alignment between depth and mask. The operation at 614 is depicted by the visualization 1202 in FIG. 12. The following equation may describe the operation at 614. ${E}_{+} = {S}_{+} ∧ {E}_{ROI}$ where Λ is the elementwise AND operator.

In embodiments where a negative gradient alignment map is computed at 610, the operation at 614 may be described by the following equation. ${E}_{-} = {S}_{-} ∧ {E}_{ROI}$ where Λ is the elementwise AND operator and *E*₋ is a binary map indicating pixels along the mask edge *E_{ROI}* that have negative gradient alignment.

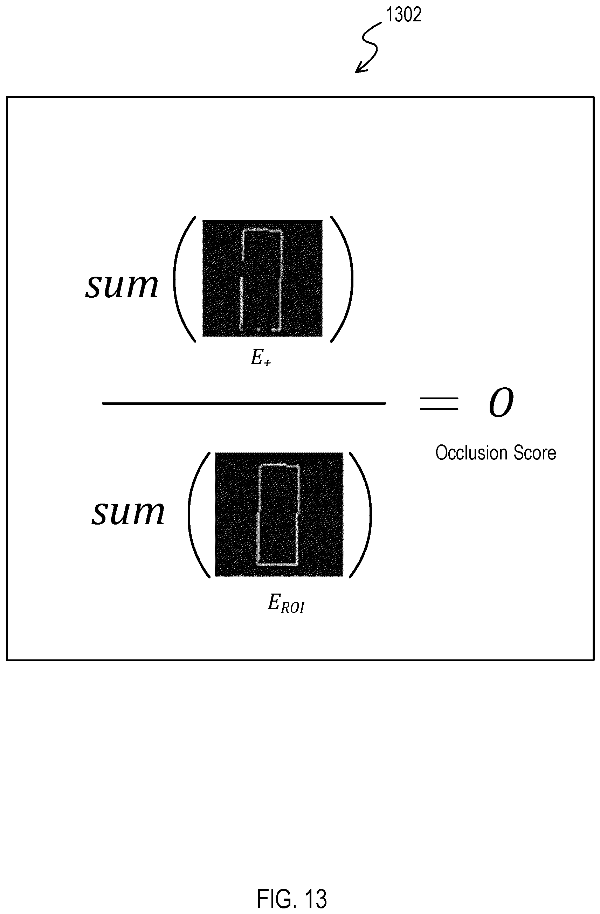

Next, at 616, a final occlusion score may be computed for the object mask. With the binary map *E*₊ computed at 614, it may be already possible to count the number of points along the mask edge that have positive gradient alignment and thus indicate a taller height inside the mask than outside. However, this value is absolute. Since object masks can be of various sizes and thus have contours of varying length, this can make it hard to compare objects of varying sizes, which is typical in robotic bin picking applications. It may hence be desirable to normalize the positive gradient alignment pixel count of *E*₊. In some embodiments, the final occlusion score *O* may be determined as the ratio of the number of pixels in the mask edge *E_{ROI}* that have positive or negative gradient alignment (i.e., the total number of pixels in *E*₊ or E_) to the total number of pixels in the mask edge *E_{ROI}.* The operation at 616 is depicted by the visualization 1302 in FIG. 13. The following equation may describe the operation at 616. $O = \frac{sum \left({E}_{+}\right)}{sum \left({E}_{ROI}\right)}$ where *sum* is a function that simply sums of the values of an array, which achieves the same effect as counting the number of positive pixels in a binary map.

Since the final occlusion score *O* computed as described above considers the number of positive gradient alignment pixels, an object with a higher occlusion score *O* would be preferable to pick.

In some embodiments, the final occlusion score may be computed based on negative gradient alignment, as follows. $O = \frac{sum \left({E}_{-}\right)}{sum \left({E}_{ROI}\right)}$

When the final occlusion score *O* considers the number of negative gradient alignment pixels, such as described above, an object with a lower occlusion score *O* would be preferable to pick.

In some cases, the final occlusion score *O* may be computed as an absolute number of pixels rather than a ratio, particularly when object size may be an important consideration for the robotic grasping operation. The absolute pixel count may preserve information about object scale and boundary extent that could be relevant for grasp planning and collision avoidance in some applications. In this case, the count of the pixels in *E*₊ (or E_) may be output as the final occlusion score without performing the normalization division, where larger objects with more boundary pixels may naturally receive higher occlusion scores than smaller objects with fewer boundary pixels.

Having performed the operations 604-616 for each one of the object masks, an output may be generated at 618 that includes a set of occlusion scores [*O*₀, *O*₁, ··· , *Oₙ*] corresponding to each of the object masks [*M*₀, *M*₁, ··· *, Mₙ*]. For example, in connection with the computer-implemented workflow 200 shown in FIG. 2, this output may be provided to the object selection module 216. As described above, the object selection module 216 may utilize this set of occlusion scores [*O*₀, *O*₁, ··· *, Oₙ*] solely, or in combination with other factors, to select an object to be grasped by the robot 102 in the current execution cycle.

The embodiments of the present disclosure may be implemented with any combination of hardware and software. In addition, the embodiments of the present disclosure may be included in an article of manufacture (e.g., one or more computer program products) having, for example, a non-transitory computer-readable storage medium. The computer readable storage medium has embodied therein, for instance, computer readable program instructions for providing and facilitating the mechanisms of the embodiments of the present disclosure. The article of manufacture can be included as part of a computer system or sold separately.

The computer readable storage medium can include a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. Computer readable program instructions described herein can be downloaded to respective computing/processing devices from a computer readable storage medium or to an external computer or external storage device via a network, for example, the Internet, a local area network, a wide area network and/or a wireless network.

The system and processes of the figures are not exclusive. Other systems, processes and menus may be derived in accordance with the principles of the disclosure to accomplish the same objectives. Although this disclosure has been described with reference to particular embodiments, it is to be understood that the embodiments and variations shown and described herein are for illustration purposes only. Modifications to the current design may be implemented by those skilled in the art, without departing from the scope of the appended claims.

## Claims

1. A computer-implemented method for performing robotic bin picking, comprising:
acquiring, via one or more cameras, image data of a scene containing a plurality of objects in a bin, the image data including a depth image of the scene,
obtaining a plurality of object masks, each object mask corresponding to an object in the scene predicted via instance segmentation based on the image data,
for each object mask:
computing a gradient similarity between image gradients of the depth image and the object mask, and
computing an occlusion score for the corresponding object based on the computed gradient similarity,
selecting an object to be picked based on the computed occlusion scores of the plurality of object masks, and
outputting a command to a robot controller to effect grasping of the selected object from the bin by a robot.

2. The method according to claim 1, wherein the image gradients are computed by:
extracting a respective region-of-interest (ROI) from the object mask and the depth image based on a padded bounding box around the object mask,
computing X and Y image gradients of the extracted depth image ROI, and
computing X and Y image gradients of the extracted object mask ROI,

3. The method according to claim 2, wherein object mask ROI and the depth image ROI are extracted by cropping the object mask and the depth image using the padded bounding box and downsizing the respective cropped images to a defined image size.

4. The method according to any of claims 2 and 3, wherein the X and Y image gradients are computed by convolving the extracted ROIs with X and Y gradient kernels respectively.

5. The method according to any of claims 2 to 4, wherein computing the gradient similarity comprises computing a pixel-wise dot product between the X and Y image gradients of the extracted depth image ROI and the X and Y image gradients of the extracted object mask ROI.

6. The method according to claim 5, wherein the depth image comprises a depth map of the scene captured via a top-down camera view of the bin, and
wherein computing the gradient similarity comprises applying a negative sign to the computed X and Y image gradients of the extracted depth image ROI prior to computing the pixel-wise dot product.

7. The method according to any of claims 5 or 6, wherein computing the occlusion score for each object mask comprises:
thresholding the gradient similarity based on a defined pixel value to obtain a gradient alignment map,
wherein the gradient alignment map is a binary map indicating pixels with positive gradient alignment or pixels with negative gradient alignment.

8. The method according to claim 7, wherein computing the occlusion score for each object mask further comprises:
computing a mask edge indicating edge pixels of the object mask ROI, and
determining a ratio of number of pixels in the mask edge that have positive or negative gradient alignment to total number of pixels in the mask edge,
wherein the occlusion score is defined by the ratio.

9. The method according to claim 8, wherein computing the mask edge comprises:
eroding the object mask ROI, and
computing an elementwise XOR between the object mask ROI and its eroded version,
wherein the mask edge comprises a binary map resulting from the XOR computation.

10. The method according to any of claims 8 or 9, wherein the number of pixels in the mask edge that have positive or negative gradient alignment is computed by:
filtering the gradient alignment map through an elementwise AND with the mask edge.

11. The method according to any of claims 7 to 10, wherein selecting the object to be picked comprises:
selecting the object with the highest occlusion score among the plurality of objects if the gradient alignment map is computed such that it indicates pixels with positive gradient alignment, or
selecting the object with the lowest occlusion score among the plurality of objects if the gradient alignment map is computed such that it indicates pixels with negative gradient alignment.

12. The method according to any of claims 1 to 10, wherein the object to be picked is selected based on a combination of the occlusion score with a height-based heuristic score.

13. The method according to any of claims 1 to 12, wherein the command for the controller is generated by computing an optimal grasp pose for a robot end effector based on the object mask corresponding to the selected object.

14. A non-transitory computer-readable storage medium including instructions that, when processed by one or more processors, configure the one or more processors to perform the method according to any one of claims 1 to 13.

15. A system for robotic bin picking, comprising:
a robot,
a controller for controlling the robot,
one or more cameras configured to capture image data of a scene containing a plurality of objects in a bin, the image data including a depth image of the scene,
one or more processors,
memory storing instructions executable by the one or more processors to:
obtain the depth image and a plurality of object masks, each object mask corresponding to an object in the scene predicted via instance segmentation based on the image data,
for each object mask:
compute a gradient similarity between image gradients of the depth image and the object mask, and
compute an occlusion score for the corresponding object based on the computed gradient similarity,
select an object to be picked based on the computed occlusion scores of the plurality of object masks, and
output a command to the controller to effect grasping of the selected object from the bin by the robot.
